# EUROPEAN PATENT SPECIFICATION

(11) **EP 4 170 203 B1**
(45) Date of publication and mention of the grant of the patent: **24.04.2024**
(21) Application number: 22193768.3
(22) Date of filing: 02.09.2022
(51) Int. Cl.: F16H 59/66, F16H 61/02, F16H 61/16

(54) **CONTROL APPARATUS FOR VEHICLE**
STEUERUNGSVORRICHTUNG FÜR FAHRZEUG
APPAREIL DE COMMANDE POUR VÉHICULE

(30) Priority: 19.10.2021 JP 2021171027
(43) Date of publication of application: 26.04.2023
(73) Proprietor: Suzuki Motor Corporation, Hamamatsu-shi, Shizuoka 432-8611 (JP)
(72) Inventor: EBATA, Tatsuro, HAMAMATSU-SHI, 432-8611 (JP); SATO, Akira, HAMAMATSU-SHI, 432-8611 (JP)
(74) Representative: Plasseraud IP

(56) References cited:
- EP-A1- 1 197 684
- JP-A- 2002 122 229
- US-A1- 2021 123 525

## Description

### [Technical Field]

The present invention relates to a control apparatus for a vehicle, and more particularly, relates to a control apparatus for a vehicle having an ACC function.

### [Background Art]

As a driving assist function has been made practical, an ACC (Adaptive Cruise Control) in which, when no vehicle ahead is present ahead of a vehicle in the driving lane of the vehicle, the vehicle carries out a constant-speed running at a set vehicle speed, and when a vehicle ahead running at a vehicle speed less than the set vehicle speed is present ahead of the vehicle in the driving lane of the vehicle, the vehicle travels while following the vehicle ahead while maintaining an inter-vehicular time.

For example, Patent Literature 1 discloses that a control apparatus for a vehicle having an ACC function includes turning radius calculating means for calculating a turning radius of the vehicle and upper limit vehicle speed setting means for setting an upper limit vehicle speed corresponding to the calculated turning radius, and controls the vehicle speed of the vehicle under turning so that the vehicle speed is equal to or less than the upper limit vehicle speed.

An example of a vehicle and a method for controlling the vehicle can be found in Patent Literature 2.

### [Citation List]

### [Patent Literature]

[Patent Literature 1] JP 2008-068752 A
[Patent Literature 2] US 2021/123525 A1

### [Summary of Invention]

The present invention provides a control apparatus for a vehicle including a step-type automatic transmission as defined by the independent claim 1. Preferred embodiments are defined in the appended dependent claims.

### [Problem to be Solved by the Invention]

With respect to a vehicle having a step-type automatic transmission, there are cases in which when the vehicle enters a sharp curve during ACC driving on a flat road or a downhill road having low running resistance and drastically reduces a torque request value to suppress acceleration, the vehicle upshifts. Thereafter, when the vehicle has passed through the curve and increases the torque request value to accelerate, the vehicle downshifts. Such upshift has an advantage of lowering the engine speed and suppressing fuel consumption. However, when a shift gear caused by upshift or downshift is performed by 2 gears in a very short time, the change in driving force becomes large, so that sensation is impaired.

The present invention has been made in view of the above circumstances, and it has as an object to improve a shift sensation in a curved section during ACC driving in a vehicle having a step-type automatic transmission.

### [Means for Solving the Problem]

In order to solve the above problem, according to the present invention,
a control apparatus for a vehicle which includes a step-type automatic transmission, the control apparatus having:
an ACC function of causing a vehicle to run at a set vehicle speed when no vehicle ahead is present in a driving lane of the vehicle, and making an acceleration request/deceleration request for causing the vehicle to run while following a vehicle ahead while maintaining a set inter-vehicular time with respect to the vehicle ahead when the vehicle ahead is present in the driving lane of the vehicle; and
a curve driving assist function for making a deceleration request when a curve driving condition is satisfied by detecting entering into a curve having a predetermined curvature or greater,
wherein the control apparatus is configured to restrict an upper limit of a shift gear of the automatic transmission to 1 gear if the curve driving condition is satisfied during running based on the ACC function.

### [Advantageous Effects of Invention]

As described above, the control apparatus for a vehicle according to the present invention restricts the upper limit of the shift gear to 1 gear when entering into a curve having a predetermined curvature or greater is detected during ACC driving. Even when a torque down request is issued by a deceleration request, two-speed shifting in a very short time is avoided, which is advantageous in improving the shift sensation in a curved section.

### [Brief Description of Drawings]

[Figure 1] Figure 1 is a block diagram showing a driving control system of a vehicle.
[Figure 2] Figure 2 is a flowchart showing gear shift control according to a first embodiment of the present invention.
[Figure 3] Figure 3 is a flowchart showing gear shift control according to a second embodiment of the present invention.
[Figure 4] Figure 4 is a schematic diagram showing a road including a curved section.

### [Mode for Carrying Out the Invention]

Hereinafter, embodiments of the present invention will be described in detail with reference to the drawings.

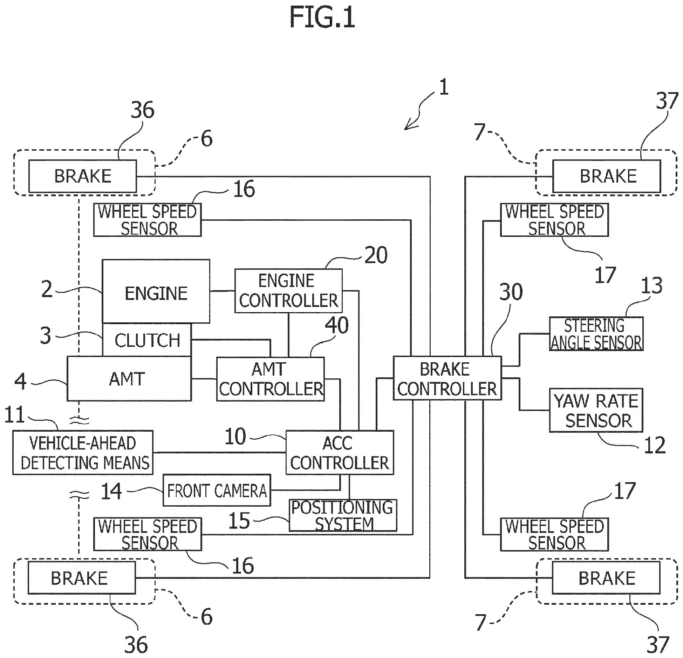

In Figure 1, a vehicle 1 includes an internal combustion engine 2, and a step-type automatic transmission 4 via a clutch 3 in a torque transmission path from the engine 2 to drive wheels (6).

The automatic transmission 4 is configured as an AMT (Automated Manual Transmission) type automatic transmission including an MT type transmission mechanism, for example, a parallel gear type transmission mechanism having a constantly engaging synchro mesh, and a transmission actuator for performing a gear changing operation thereof, and includes an AMT controller 40 for performing a speed change operation while referring to a shift map (automatic transmission diagram) based on a vehicle speed and a throttle opening degree.

The transmission actuator includes a select actuator for performing switching of a P/R/N/D range and switching of high-speed gear/low-speed gear according to the operation position of a select lever (not shown), and a shift actuator for performing a shift operation, and executes a speed change operation consisting of clutch release, shift gear, and clutch engagement interlocking with a clutch actuator.

The vehicle 1 includes an engine controller 20 for controlling the output of the engine 2 in accordance with a throttle opening degree (torque request) to be given by an accelerator pedal operation (not shown) and an acceleration/deceleration command of an ACC controller 10, described later. The AMT controller 40 executes engine control linked to the clutch release/engagement operation in the speed change operation by cooperative control with the engine controller 20.

The vehicle 1 includes a brake system which is equipped with a brake controller 30 and a brake actuator (hydraulic actuator) (not shown) capable of individually controlling the braking force of brakes 36 of left and right front wheels 6, and brakes 37 of left and right rear wheels 7, in accordance with a brake pedal operation (not shown) or a deceleration command of the ACC controller 10, described later, wheel speed sensors 16 for the left and right front wheels 6, and wheel speed sensors 17 for the left and right rear wheels 7, and constitutes an ABS/vehicle action stabilizing device.

The vehicle 1 having the basic configuration as described above includes a vehicle-ahead detecting means 11 constituting an ACC system together with the ACC controller 10. As the vehicle-ahead detecting means 11, there can be used one or a plurality of detecting means, which have a function of detecting the presence of a vehicle ahead and objects (obstacles, structures) ahead of the vehicle, such as a millimeter wave radar, a monocular camera, a stereo camera, or a LiDAR, and can measure the relative distances between the vehicle ahead, the obstacles, and the vehicle (relative inter-vehicular times).

The ACC controller 10 is configured to issue an acceleration/deceleration command (torque request/brake request) to the engine controller 20 and the brake controller 30 in place of a driver's acceleration/brake operation based on detection information of the vehicle-ahead detecting means 11 and the vehicle speed calculated from the detection values of the wheel speed sensors 16 and 17, and execute adaptive cruise control (constant speed running/following running control/deceleration stop/restart control) for all vehicle speed ranges.

In other words, the brake controller 30 that receives the deceleration command from the ACC controller 10 issues a brake request (hydraulic pressure request) to the brake actuator to control the braking force of the brakes 36 and 37, thereby controlling the vehicle speed. Furthermore, the engine controller 20 that receives the acceleration/deceleration command (torque up request/torque down request) from the ACC controller 10 controls the actuator output (throttle opening degree) of the engine 2 to control the torque of the engine 2, thereby controlling the vehicle speed.

With the control of the ACC controller 10, when there is no vehicle ahead, the vehicle 1 travels while maintaining a set vehicle speed, and when the vehicle 1 catches up with the vehicle ahead, the vehicle 1 matches the vehicle speed with the vehicle speed of the vehicle ahead and travels while following the vehicle ahead while maintaining an inter-vehicular distance corresponding to a predetermined inter-vehicular time (time gap = inter-vehicular distance / vehicle speed). Furthermore, when the vehicle 1 catches up with a vehicle ahead that decelerates and stops, the vehicle 1 secures a predetermined inter-vehicular distance, and decelerates and stops. When the vehicle ahead starts within a predetermined time, the vehicle restarts in accordance with the start of the vehicle ahead, and continues to travel while following the vehicle ahead.

Each of the engine controller 20, the AMT controller 40, the brake controller 30, and the ACC controller 10 described above is configured by a microcomputer (MCU) including a ROM for storing control programs and setting data, a RAM for temporarily storing arithmetic processing results, a CPU for performing arithmetic processing, a communication I/F, and the like, and they are connected so as to be capable of communicating with one another together with a sensor group including the vehicle-ahead detecting means 11 via an in-vehicle network (CAN or the like).

Curve driving assist function during ACC driving
The ACC controller 10 has a curve driving assist function in which when an entry into a curve having a predetermined curvature or greater is detected during ACC driving, the ACC controller 10 makes a deceleration request so that the vehicle speed is controlled to a vehicle speed (curve driving vehicle speed) at which the vehicle can stably travel on the curve.

As the means for detecting a curve having a predetermined curvature or greater, there may be used known means such as a yaw rate sensor 12, a steering angle sensor 13, image analysis of a front camera 14 which can also constitute the vehicle-ahead detecting means 11, matching between position information detected by a positioning system 15 (GNSS, navigation system) and map information (curve curvature information), and combined use thereof.

For example, when the yaw rate sensor 12 is used, a look-up table or the like for indicating a yaw rate threshold value corresponding to a vehicle speed at which the vehicle can stably run according to the radius of curvature of a curve is prepared in advance in a ROM area, and when the yaw rate detected by the yaw rate sensor 12 reaches a yaw rate threshold value specified according to the current vehicle speed, it can be determined that the vehicle has entered a curve having a predetermined curvature or greater. At this time, a yaw rate determined from the difference between the wheel speeds detected by the left and right wheel speed sensors 16 and 17 can also be used in combination.

Furthermore, when the image analysis of the front camera 14 is used, the curvature of the curve can be estimated by recognizing a traffic lane during running (lane markings, roadside line) and performing coordinate conversion (projection conversion) to a bird's-eye view image. When using the image analysis of the front camera 14 or the position information of the positioning system 15 and the map information, it is possible to detect a forward curve on a running road before entering the curve. Therefore, when the approach to the curve is detected by these, surveillance of the curve curvature by the yaw rate sensor 12 and calculation of the upper limit vehicle speed for curve driving can be set to be started. The curve detecting means as described above is also used for determining the end of curve driving when passing through a curve.

When entry into a curve having a predetermined curvature or greater is detected by the curve detecting means during ACC driving, and it is also estimated that the vehicle speed at that time (ACC set speed or vehicle ahead following speed) exceeds the vehicle speed which enables stable running in the curve, that is, if a curve driving condition is satisfied, the ACC controller 10 shifts to a curve driving assist mode, and makes a deceleration request to the engine controller 20 and the brake controller 30 regardless of the ACC set speed or the vehicle ahead following vehicle speed so that the vehicle speed is controlled to vehicle speed enabling stable running in the curve.

In response to the deceleration request (torque down request/brake request) from the ACC controller 10, the engine controller 20 reduces the torque of the engine 2, and the brake controller 30 causes the brakes 6 and 7 to operate when the deceleration request value is equal to or greater than a predetermined value. At this time, the deceleration request (torque down request) to the engine controller 20 is also shared with the AMT controller 40, and the AMT controller 40 refers to the shift map based on the current vehicle speed and the torque down request value to perform the speed change operation.

When the vehicle enters a sharp curve during ACC driving on a flat road or downhill road having low running resistance and the torque request value drops to suppress acceleration, the vehicle upshifts. However, when the torque request value drops significantly, for example, the torque request value is equal to zero (Nm), as already mentioned above, the shift gear may be performed by 2 gears in a very short time, which impairs the shift sensation.

### First Embodiment

Therefore, in the control according to the present invention, if entry into a curve having a predetermined curvature or greater is detected and a curve driving condition is satisfied, the upper limit of the shift gear of the automatic transmission 4 is limited to 1 gear.

In other words, when the curve driving condition is satisfied (curve driving flag), the ACC controller 10 makes a deceleration request for the curve driving assist. However, if the curve driving condition is satisfied, the AMT controller 40 limits the upshift to 1 gear regardless of the torque request value.

For example, when the AMT controller 40 executes a 1-gear upshift in response to a deceleration request in the curve driving assist mode, the ACC controller 10 that has acquired the upshift prohibits further upshift by the AMT controller 40 until the curve driving ends.

For example, when the vehicle 1 is running at 4th gear of a forward 6-speed automatic transmission 4 during ACC driving, enters a curve, and upshifts to 5th gear in response to a deceleration request from the ACC controller 10, upshift to 6th gear is prohibited until curve driving ends.

As a result, it is possible to shift to straight driving after the end of curve driving, or to shift up to 4th gear immediately by an acceleration request (torque up request) according to the relaxation of the vehicle speed limit due to the decrease in yaw rate due to the decrease in the curvature of the curve. Acceleration/deceleration performance and shift feeling can be well maintained.

### Second Embodiment

Furthermore, if the curve driving condition is satisfied, the upper limit of the shift gear can be limited to 1 gear, not until the curve driving ends, but only for a predetermined time.

In other words, if the curve driving condition is satisfied, the AMT controller 40 executes a 1-gear upshift in response to a deceleration request for curve driving assist, and at the same time, the ACC controller 10 that has acquired upshift starts to count a predetermined time T1 (for example, 1 to 2 seconds), and prohibits further upshift by the AMT controller 40 until the time-count of the predetermined time T1 is completed.

If the curve driving condition is satisfied after the predetermined time T1 has elapsed, the limit for the shift gear is reset, the time-count of the predetermined time T1 is restarted, and the upper limit of the shift gear of the automatic transmission 4 is limited to 1 gear (further upshift of 1 gear is allowed) until the time-count ends.

For example, when the vehicle 1 is running at 4th gear of the forward 6-speed automatic transmission 4 during ACC driving, enters a curve, and upshifts to 5th gear in response to a deceleration request from the ACC controller 10, the upshift to 6th gear is prohibited until the predetermined time T1 has elapsed. However, in such a case in which the deceleration request at the curve continues even after the predetermined time T1 has elapsed, the upshift to 6th gear is permitted. Furthermore, the time-count of a further predetermined time T1 is started with the upshift to 6th gear, and downshift to 5th gear is permitted until the predetermined time T1 has elapsed. However, downshift to 4th gear is prohibited, and after a further predetermined time T1 has elapsed, the downshift to 4th gear is allowed. In this case as well, the shift gear is prevented from being performed by 2 gears in a very short time, and a good shift sensation can be maintained.

### Third Embodiment

For mountain roads and the like, there are many cases in which a curve having a predetermined curvature or greater is often encountered again. Therefore, it is possible to add control so as to retain a curve driving history in a case in which the curve driving condition is satisfied and the vehicle shifts to curve driving, and to prohibit a further shift gear in a case in which the curve driving is repeated during a predetermined time T2 (for example, 5 to 30 seconds) longer than the predetermined time T1.

In other words, if a curve driving condition is first satisfied, the time-count of the predetermined time T2 is performed in parallel with the time-count of the predetermined time T1, and the curve driving history is retained until the time-count of the predetermined time T2 ends. During that period of time, if a next curve driving condition is not satisfied, the curve driving history is cleared. On the other hand, if the next curve driving condition is satisfied before the time-count of the predetermined time T2 ends, the time-count of the predetermined time T2 is newly performed, and the shift gear by the AMT controller 40 is prohibited. This control has an advantage in that when a curve having a predetermined curvature or greater is repeated, the gear position is fixed, so that the speed change operation is avoided and good acceleration/deceleration performance is obtained.

### First Example

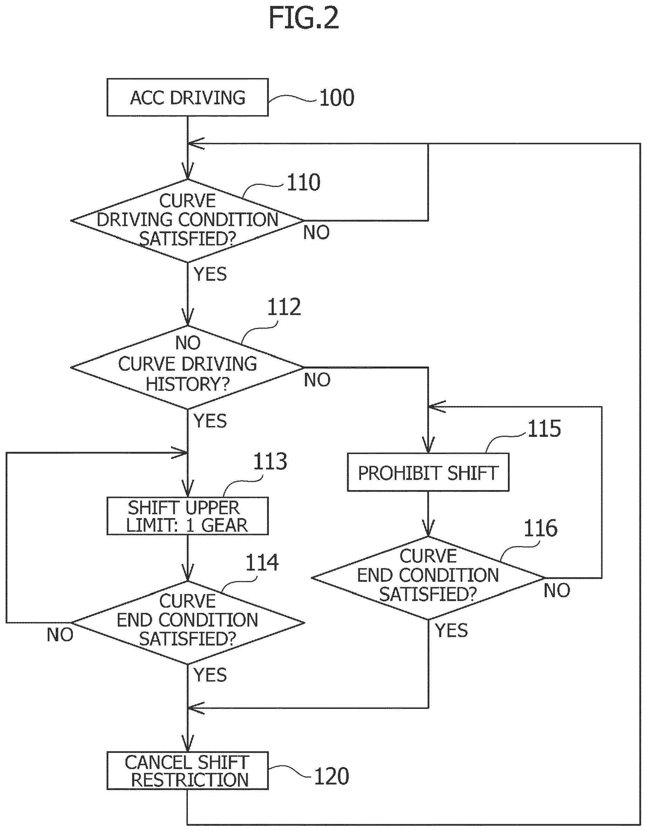

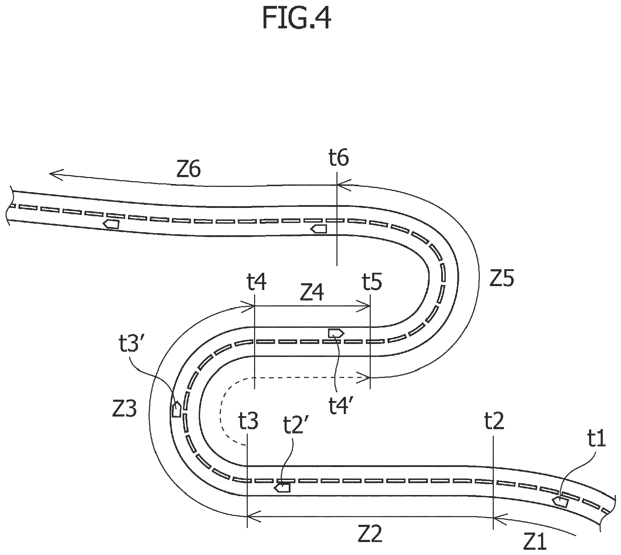

Next, an example of the curve driving assist function during ACC driving corresponding to the third embodiment will be described with reference to the flowcharts of Figure 2 and Figure 4.

First, at time t1, the vehicle is running in a curved section Z1 at 4th gear, and the ACC controller 10 performs only speed control for maintaining a set vehicle speed because the curvature is less than a predetermined curvature (step 100).

Thereafter, the speed control for maintaining the set vehicle speed is continued even when time t2 has passed and the vehicle enters a straight section Z2. However, when a curved section Z3 having a predetermined curvature or greater is detected ahead on a running road at time t2' and the curve driving condition is satisfied at time t3 (step 110; YES), the ACC controller 10 refers to the curve driving history (step 112). When there is no curve driving history within the predetermined time T2 (step 112; YES), the ACC controller 10 makes a deceleration request so as to decelerate the vehicle to a vehicle speed which enables the vehicle to stably run in the curved section Z3, and at the same time, the ACC controller 10 restricts the shift gear to an upper limit 1 gear (step 113).

In response to the deceleration request (torque down request) of the ACC controller 10, the AMT controller 40 upshifts to 5th gear. However, since the shift gear is restricted to the upper limit of 1 gear during the predetermined time T1, upshift to 6th gear is not performed (step 113).

Thereafter, when a straight section Z4 is detected and a curve end condition is satisfied at time t4 after curve driving (t3') (step 114; YES), the shift restriction of the upper limit of 1 gear is canceled (step 120), and downshift to 4th gear is performed to start acceleration in response to an acceleration request (torque up request) for setting the set vehicle speed to a target vehicle speed. However, the time-count of the predetermined time T2 is continued from the time t3, and the curve running history based on satisfactoriness of the curve driving condition in the curved section Z3 is retained.

Thereafter, when the vehicle runs on a short straight section Z4, a curved section Z5 having a predetermined curvature or greater is detected ahead on the running road at time t4', and a curve driving condition is satisfied at time t5 before the predetermined time T2 has passed (step 110; YES), the ACC controller 10 refers to the curve driving history (step 112). Since there is a curve driving history within the predetermined time T2 (step 112; NO), the ACC controller 10 makes a deceleration request to decelerate the vehicle to a vehicle speed which enables the vehicle to stably run on the curved section Z5, and at the same time, prohibits the shift gear (step 115). Following the above operation, the gear position is fixed to 4th gear during running on the curved section Z5.

Thereafter, when a relatively straight section Z6 is detected at time t6 after the curve driving has been performed and the curve end condition is satisfied (step 116; YES), the shift restriction is canceled (step 120). However, since the gear position has been fixed to 4th gear during the curve driving, acceleration is started immediately in response to an acceleration request (torque up request) for setting the set vehicle speed to a target vehicle speed. However, the time-count of the predetermined time T2 is continued from the time t5, and the curve running history in the curved section Z5 is retained.

Thereafter, the vehicle runs in the relatively straight section Z6, and the curve driving history in the curved section Z5 is cleared at the time point when the predetermined time T2 has elapsed.

Even when the vehicle has stopped during running on a curved section, the curve end condition is satisfied and the shift restriction is canceled. Furthermore, the curve driving assist function operates on the assumption of ACC driving. Therefore, when the ACC function is overridden due to intervention by a driver's brake operation or accelerator operation, the shift restriction is canceled, and the curve driving assist function is also stopped.

In the first example (third embodiment), the case in which the time-count of the predetermined time T2 for which the curve driving history is retained is started from the time point when the curve driving condition is satisfied has been described, but the time-count of the predetermined time T2 (T2') may be started from the time point when the vehicle has passed through the curved section and the curve driving end condition is satisfied.

Furthermore, instead of prohibiting the shift gear when a curve is encountered again within the predetermined time T2 (T2'), a switch which can be manually operated by a driver, for example, a mountain road mode switch, may be set, and in a state in which the mountain road mode switch is turned on and a mountain road mode (shift gear prohibition mode) is specified, the shift gear may be prohibited immediately when the curve driving condition is satisfied.

### Second Example

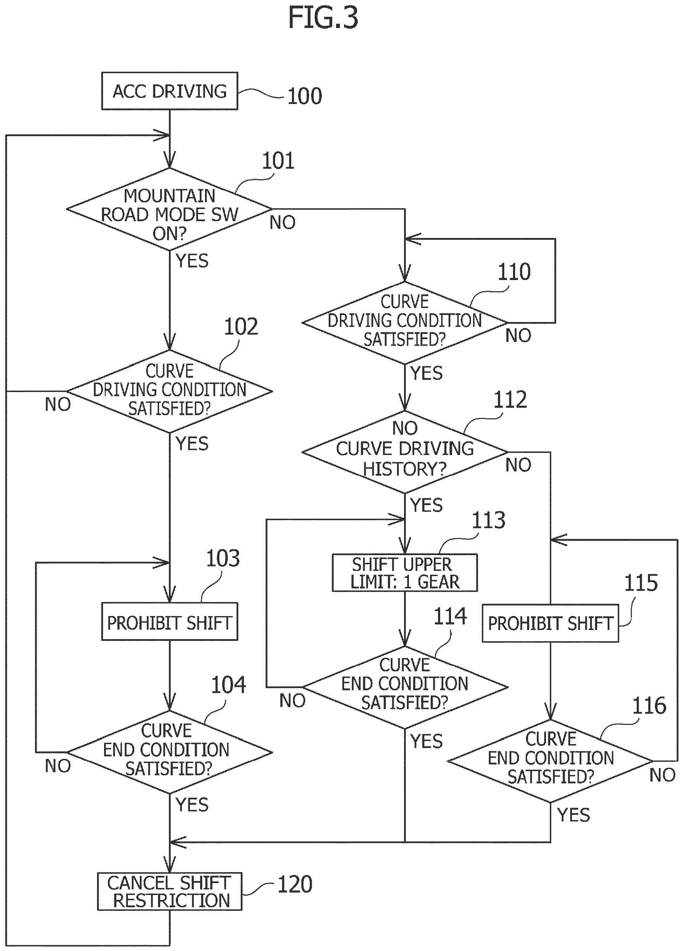

Figure 3 is a flowchart showing a second example of the curve driving assist function including the mountain road mode switch, and description will be made with reference to Figures 3 and 4.

When the mountain road mode switch is turned on (step 101; YES) during ACC driving (step 100), for example, when the vehicle is running on the straight section Z2 in 4th gear, the curved section Z3 having a predetermined curvature or greater is detected ahead on the running road at time t2', and the curve driving condition is satisfied at time t3 (step 102; YES), the ACC controller 10 makes a deceleration request for decelerating the vehicle to a vehicle speed at which the vehicle can stably run in the curved section Z3, and at the same time, prohibits the shift gear (step 103). As a result, the gear position is fixed in 4th gear during running on the curved section Z3.

Thereafter, when the straight section Z4 is detected at time t4 and the curve end condition is satisfied (step 104; YES), the shift restriction is canceled (step 120). However, since the gear position has been fixed in 4th gear, acceleration is immediately started in response to an acceleration request (torque up request) for setting the set vehicle speed to a target vehicle speed.

Thereafter, when the vehicle runs in the short straight section Z4, the curved section Z5 having a predetermined curvature or greater is detected ahead on the running road at time t4', and the curve driving condition is satisfied at time t5 (step 102; YES), the ACC controller 10 makes a deceleration request for decelerating the vehicle to a vehicle speed at which the vehicle can stably run in the curved section Z5, and at the same time, prohibits the shift gear (step 103).

In this way, when the mountain road mode switch is turned on, the shift gear during curve driving is prohibited when the vehicle enters a curve having a predetermined curvature or greater during ACC driving. Therefore, there is an advantage in that the speed change operation within the curve is avoided, and good acceleration/deceleration performance can be obtained.

In particular, in the vehicle 1 equipped with the AMT type automatic transmission 4, since momentary torque control linked to the engagement/disengagement of the clutch is accompanied during gear shifting, the gear position during curve driving is fixed, so that there is an advantage in that sensations during curve driving can be excellently maintained, and ACC driving suitable for an AMT vehicle having a high power transmission efficiency in a clutch-engaged state can be performed.

In the above embodiments, the curve assist function in the vehicle having the ACC function has been described, but the present invention can be implemented as a curve assist function in a vehicle including an LKA (Lane Keeping Assist) function for recognizing the driving lane of a vehicle with the front detecting means of the vehicle which is exemplified as the front camera 14 and the vehicle-ahead detecting means 11, and performing automatic steering or assist steering so that running within the driving lane of the vehicle is maintained, and a vehicle equipped with ADAS (Advanced Driving Assist System) in which an ACC function (control in vehicle length direction) and an LKA function (control in vehicle width direction) are combined with each other.

Some embodiments of the present invention have been described above, but it should be noted that the present invention is not limited to the above embodiments, and various modifications and changes can be made within the scope of the appended claims.

### [Reference Signs List]

- 1: Vehicle
- 2: Engine
- 3: Clutch
- 4: Automatic transmission
- 10: ACC controller
- 11: Vehicle-ahead detecting means
- 12: Yaw rate sensor
- 13: Steering angle sensor
- 14: Front camera
- 15: Positioning system
- 16,17: Wheel speed sensor
- 20: Engine controller
- 30: Brake controller
- 36,37: Brake
- 40: AMT controller

## Claims

1. A control apparatus (10) for a vehicle (1) including a step-type automatic transmission (4), the control apparatus (10) having:
an Adaptive Cruise Control, ACC, function of causing a vehicle (1) to run at a set vehicle speed when no vehicle ahead is present in a driving lane of the vehicle (1), and making an acceleration request/deceleration request for causing the vehicle (1) to run while following a vehicle ahead with maintaining a set inter-vehicular time with respect to the vehicle ahead when the vehicle ahead is present in the driving lane of the vehicle (1); and
a curve driving assist function for making a deceleration request when a curve driving condition is satisfied by detecting entry into a curve having a predetermined curvature or greater and estimating that the vehicle speed exceeds the vehicle speed which enables stable running in the curve,
and **characterised in that**
the control apparatus (10) is configured to restrict an upper limit of a shift gear of the automatic transmission (4) to 1 gear if the curve driving condition is satisfied during running based on the ACC function.

2. The control apparatus (10) for a vehicle (1) according to claim 1, wherein the control apparatus (10) is configured to retain a curve driving history if the curve driving condition is satisfied, and thereafter
(i) clear the curve driving history if a next curve driving condition is not satisfied within a first predetermined time, or
(ii) retain the curve driving history if the next curve driving condition is satisfied within the first predetermined time, and then prohibit a shift gear until the curve driving history is cleared.

3. The control apparatus (10) for a vehicle (1) according to claim 1 or 2, wherein the control apparatus (10) is configured to start time-count of a second predetermined time if the curve driving condition is satisfied, and reset restriction of the shift gear if the curve driving condition is satisfied when the second predetermined time has elapsed.

4. The control apparatus (10) for a vehicle according to any one of claims 1 to 3, wherein the control apparatus (10) is configured to prohibit a shift gear if the curve driving condition is satisfied in a state in which a shift gear prohibition mode is specified by turning on an artificially operable switch.

5. The control apparatus (10) for a vehicle (1) according to any one of claims 1 to 4, wherein the automatic transmission is an Automated Manual Transmission, AMT, type automatic transmission (4) comprising a clutch (3) for transmitting an output of an engine (2) to a transmission mechanism, a clutch actuator for engaging and disengaging the clutch (3), a transmission actuator for changing a gear position of the transmission mechanism, and an AMT controller (40) for controlling the transmission actuator and the clutch actuator to execute the shift gear.

## Patentansprüche

1. Steuervorrichtung (10) für ein Fahrzeug (1), welches ein automatisches Getriebe (4) vom Stufentyp umfasst, wobei die Steuervorrichtung (10) aufweist:
eine Funktion Adaptive Cruise Control, ACC, eines Veranlassens, dass ein Fahrzeug (1) mit einer festgelegten Fahrzeuggeschwindigkeit fährt, wenn kein vorausfahrendes Fahrzeug in einer Fahrspur des Fahrzeugs (1) vorhanden ist, und eines Vornehmens einer
Beschleunigungsaufforderung/Verzögerungsaufforderung zum Veranlassen, dass das Fahrzeug (1) fährt, während es einem vorausfahrenden Fahrzeug unter Beibehaltung einer festgelegten Zwischenfahrzeugzeit in Bezug auf das vorausfahrende Fahrzeug folgt, wenn das vorausfahrende Fahrzeug in der Fahrspur des Fahrzeugs (1) vorhanden ist; und
eine Kurvenfahrtassistenzfunktion zum Vornehmen einer Verzögerungsaufforderung, wenn eine Kurvenfahrtbedingung erfüllt ist, indem ein Eingang in eine Kurve detektiert wird, welche eine vorbestimmte Krümmung oder mehr aufweist, und geschätzt wird, dass die Fahrzeuggeschwindigkeit die Fahrzeuggeschwindigkeit überschreitet, welche ein stabiles Fahren in der Kurve ermöglicht,
und **dadurch gekennzeichnet, dass**
die Steuervorrichtung (10) dazu eingerichtet ist, eine obere Grenze eines Gangschaltens des automatischen Getriebes (4) auf 1 Gang zu begrenzen, wenn die Kurvenfahrtbedingung erfüllt ist, während eines Fahrens auf Grundlage derACC-Funktion.

2. Steuervorrichtung (10) für ein Fahrzeug (1) nach Anspruch 1, wobei die Steuervorrichtung (10) dazu eingerichtet ist, eine Kurvenfahrthistorie zu speichern, wenn die Kurvenfahrtbedingung erfüllt ist, und danach
(i) die Kurvenfahrthistorie zu löschen, wenn innerhalb einer ersten vorbestimmten Zeit keine nächste Kurvenfahrtbedingung erfüllt ist, oder
(ii) die Kurvenfahrthistorie zu speichern, wenn innerhalb der ersten vorbestimmten Zeit die nächste Kurvenfahrtbedingung erfüllt ist, und dann ein Gangschalten zu unterbinden, bis die Kurvenfahrthistorie gelöscht ist.

3. Steuervorrichtung (10) für ein Fahrzeug (1) nach Anspruch 1 oder 2, wobei die Steuervorrichtung (10) dazu eingerichtet ist, eine Zeitzählung einer zweiten vorbestimmten Zeit zu starten, wenn die Kurvenfahrtbedingung erfüllt ist, und eine Beschränkung des Gangschaltens zurückzusetzen, wenn die Kurvenfahrtbedingung erfüllt ist, wenn die zweite Vorbestimmte Zeit verstrichen ist.

4. Steuervorrichtung (10) für ein Fahrzeug nach einem der Ansprüche 1 bis 3, wobei die Steuervorrichtung (10) dazu eingerichtet ist, ein Gangschalten zu unterbinden, wenn die Kurvenfahrtbedingung erfüllt ist, in einem Zustand, in welchem ein Gangschalten-Unterbindungsmodus spezifiziert ist, indem ein künstlich betätigbarer Schalter eingeschaltet wird.

5. Steuervorrichtung (10) für ein Fahrzeug (1) nach einem der Ansprüche 1 bis 4, wobei das automatische Getriebe ein automatisches Getriebe (4) vom Typ Automated Manual Transmission, AMT, ist, umfassend eine Kupplung (3) zum Übertragen einer Leistung eines Motors (2) auf einen Getriebemechanismus, einen Kupplungsaktuator zum in Eingriff bringen und außer Eingriff bringen der Kupplung (3), einen Getriebeaktuator zum Ändern einer Gangstellung des Getriebemechanismus und eine AMT-Steuereinrichtung (40) zum Steuern des Getriebeaktuators und des Kupplungsaktuators, um das Gangschalten auszuführen.

## Revendications

1. Appareil de commande (10) pour un véhicule (1) comportant une transmission automatique (4) de type échelonné, l'appareil de commande (10) ayant :
une fonction de régulateur de vitesse adaptatif, ACC, consistant à amener un véhicule (1) à se déplacer à une vitesse de véhicule définie lorsqu'aucun véhicule devant n'est présent dans une voie de circulation du véhicule (1), et à faire une demande d'accélération/demande de décélération pour amener le véhicule (1) à se déplacer tout en suivant un véhicule devant avec un maintien d'un temps entre véhicules défini par rapport au véhicule devant lorsque le véhicule devant est présent dans la voie de circulation du véhicule (1) ; et
une fonction d'aide à la conduite dans un virage pour faire une demande de décélération lorsqu'une condition de conduite dans un virage est remplie en détectant une entrée dans un virage ayant une courbure prédéterminée ou plus et en estimant que la vitesse de véhicule dépasse la vitesse de véhicule qui permet un déplacement stable dans le virage,
et **caractérisé en ce que**
l'appareil de commande (10) est configuré pour restreindre une limite supérieure d'un changement de vitesse de la transmission automatique (4) à 1 vitesse si la condition de conduite dans un virage est remplie pendant le déplacement sur la base de la fonction ACC.

2. Appareil de commande (10) pour un véhicule (1) selon la revendication 1, dans lequel l'appareil de commande (10) est configuré pour conserver un historique de conduite dans un virage si la condition de conduite dans un virage est remplie, et par la suite
(i) effacer l'historique de conduite dans un virage si une condition de conduite dans un virage suivante n'est pas remplie dans un premier temps prédéterminé, ou
(ii) conserver l'historique de conduite dans un virage si la condition de conduite dans un virage suivante est remplie dans le premier temps prédéterminé, et ensuite interdire un changement de vitesse jusqu'à ce que l'historique de conduite dans un virage soit effacé.

3. Appareil de commande (10) pour un véhicule (1) selon la revendication 1 ou 2, dans lequel l'appareil de commande (10) est configuré pour lancer un comptage de temps d'un second temps prédéterminé si la condition de conduite dans un virage est remplie, et réinitialiser la restriction du changement de vitesse si la condition de conduite dans un virage est remplie lorsque le second temps prédéterminé s'est écoulé.

4. Appareil de commande (10) pour un véhicule selon l'une quelconque des revendications 1 à 3, dans lequel l'appareil de commande (10) est configuré pour interdire un changement de vitesse si la condition de conduite dans un virage est remplie dans un état dans lequel un mode d'interdiction de changement de vitesse est spécifié en allumant un commutateur pouvant être activé artificiellement.

5. Appareil de commande (10) pour un véhicule (1) selon l'une quelconque des revendications 1 à 4, dans lequel la transmission automatique est une transmission automatique (4) de type transmission manuelle automatisée, AMT, comprenant un embrayage (3) pour transmettre une sortie d'un moteur (2) à un mécanisme de transmission, un actionneur d'embrayage pour embrayer et débrayer au moyen de l'embrayage (3), un actionneur de transmission pour changer une position de vitesse du mécanisme de transmission, et un dispositif de commande AMT (40) pour commander l'actionneur de transmission et l'actionneur d'embrayage pour exécuter le changement de vitesse.
